# EUROPEAN PATENT APPLICATION

(11) **EP 2 298 525 A1**
(43) Date of publication of application: **23.03.2011**
(21) Application number: 09762529.7
(22) Date of filing: 11.06.2009
(51) Int. Cl.: B29C 45/14, B29K 105/22, B29K 305/02

(54) **INTEGRALLY INJECTION-MOLDED ALUMINUM/RESIN ARTICLE AND PROCESS FOR PRODUCING THE SAME**

(30) Priority: 12.06.2008 JP 2008153805; 12.06.2008 JP 2008153806
(71) Applicant: Nippon Light Metal Co., Ltd., Tokyo 140-8628 (JP); Polyplastics Co., Ltd., Tokyo 108-8280 (JP)
(72) Inventor: ENDO, Masanori, Shizuoka-shi Shizuoka 421-3291 (JP); NAGASAWA, Daisuke, Shizuoka-shi Shizuoka 421-3291 (JP); MIYAMOTO, Yasumitsu, Fuji-shi Shizuoka 416-8533 (JP)
(74) Representative: Vossius & Partner
(86) International application number: PCT/JP2009/060699
(87) International publication number: WO 2009/151099

(57) **Abstract**

Provided are an integrally injection-molded aluminum/resin article capable of having extremely high adhesion strength and air tightness at the interface between an aluminum shape made of an aluminum alloy and a molded resin integrally bonded to each other by injection molding, retaining excellent adhesion strength and air tightness in harsh environments in terms of temperature, humidity, dust, and the like, and exhibiting excellent durability and heat resistance, and a process for producing the same. The integrally injection-molded aluminum/resin article includes: an aluminum shape which is made of an aluminum alloy and has recesses derived from irregularities formed in the surface; and a molded resin which is integrally formed on the surface of the aluminum shape by the injection molding of a thermoplastic resin and has fitting portions formed in the recesses by the entering of the thermoplastic resin followed by solidification during the injection molding, the aluminum shape and the molded resin being locked with each other through the recesses and the fitting portions.

## Description

### TECHNICAL FIELD

The present invention relates to an integrally injection-molded aluminum/resin article including an aluminum shape made of an aluminum alloy and a molded resin integrally formed on the surface of the aluminum shape by injection molding of a thermoplastic resin, and a process for producing the same, and more specifically, to an integrally injection-molded aluminum/resin article excellent in adhesion strength and air tightness, which may be preferably used in a wide range of fields typified by, but not particularly limited to, various sensor components for automobiles, various switch components for household electric appliances, and capacitor components for various industrial equipment, and a process for producing the same.

### BACKGROUND ART

In the fields of various sensor components for automobiles, various switch components for household electric appliances, capacitor components for various industrial equipment, and the like, particularly in the fields of components for automobiles and the like, the components are used in harsh environments in terms of temperature, humidity, and dust in many cases, and improvements in durability, heat resistance, and air tightness in such harsh environments are important issues for the sensor components, the switch components, and the capacitor components.

For a technology for bonding a metal and a resin, a process using an adhesive has been conventionally known as a typical technology. However, as an industrially more preferred bonding process from the viewpoints of working efficiency, a reduction in the number of components, simplification of a product shape, durability, and the like, there can be listed a process using insert molding in which a metal component is set in an injection-molding mold, a molten resin is injected into the mold to fill the mold, and the resin is then adhered to the metal component. In addition, in order to perform the bonding between the metal component and the resin at lower cost and further improve an adhesion force, there is known a process in which a specific surface treatment is performed on the surface of the metal component to be bonded to the resin.

For example, Patent Literature 1 proposes a composite including an aluminum alloy shape having a surface roughness of 5 µm to 50 µm and having fine depressions or protrusions with 1 µm or less on the surface, and a specific thermoplastic resin composition entered and adhered to the depressions or protrusions of the aluminum alloy shape.

In addition, Patent Literature 2 proposes a metal-resin composite including an aluminum alloy component that is obtained by immersion in an aqueous solution of one kind or more selected from ammonia, hydrazine, and a water-soluble amine compound and has ultrafine depressions each having a number average inner diameter of 10 to 80 nm formed on the surface, and a thermoplastic synthetic resin composition component adhered to the surface by injection molding.

Further, Patent Literature 3 proposes a molded article including a metal plate subjected to any ground treatment selected from an anodization treatment, an unsealed anodization treatment, an acid etching treatment, a galvanized chromate treatment, and a sandblast treatment, and a thermoplastic material integrated with the metal plate by insert inject ion molding without using an adhesive.

Further, Patent Literature 4 proposes a process for producing a silicon resin-metal composite by providing a thin aluminum sheet with a fine rough surface layer by a chemical etching process or an electrolytic etching process, and injecting a silicon resin.

Moreover, Patent Literature 5 proposes a process for producing a metal inserted resin composite molded article by performing chemical etching on a surface of a metal component, and performing injection molding using a thermoplastic resin material.

However, in each of the cases described above, adhesion strength and air tightness at a metal-resin interface in harsh environments are not necessarily sufficient, and the development of a metal-resin composite having more excellent adhesion strength and air tightness has been demanded.

### CITATION LIST

### PATENT LITERATURE

[PTL 1] WO 2004/041533 A1
[PTL 2] JP 2007-182071 A
[PTL 3] JP 2000-127199 A
[PTL 4] JP 2000-176962 A
[PTL 5] JP 3467471 B

### SUMMARY OF INVENTION

### TECHNICAL PROBLEM

In view of the foregoing, with attention focused on an aluminum alloy as a metal material, the inventors of the present invention have conducted extensive studies on the production and provision of an integrally injection-molded aluminum/resin article capable of having extremely high adhesion strength and air tightness at the interface between an aluminum shape constituted of the aluminum alloy and a molded resin integrally formed on the surface of the aluminum shape by injection molding of a thermoplastic resin, retaining excellent adhesion strength and air tightness in harsh environments in terms of temperature, humidity, dust, and the like, and exhibiting excellent durability and heat resistance. As a result, the inventors have found that the adhesion strength and air tightness between the aluminum shape and the molded resin are significantly improved by forming a specific surface shape having recesses in the surface of the aluminum shape by an etching treatment. Thus, the present invention has been achieved.

Accordingly, an object of the present invention is to provide an integrally injection-molded aluminum/resin article capable of having extremely high adhesion strength and air tightness at the interface between an aluminum shape constituted of an aluminum alloy and a molded resin that are integrally bonded to each other by injection molding, retaining excellent adhesion strength and air tightness in harsh environments in terms of temperature, humidity, dust, and the like, and exhibiting excellent durability and heat resistance.

In addition, another object of the present invention is to provide a process for producing an integrally injection-molded aluminum/resin article that can produce the integrally injection-molded aluminum/resin article capable of having extremely high adhesion strength and air tightness at the interface between the aluminum shape and the molded resin, retaining excellent adhesion strength and air tightness in the harsh environments, and exhibiting excellent durability and heat resistance.

### SOLUTION TO PROBLEM

That is, the present invention is an integrally injection-molded aluminum/resin article, including:
an aluminum shape which is made of an aluminum alloy and has irregularities in a part of or the whole of a surface; and
a molded resin which is bonded to one surface of the aluminum shape in a butting manner by injection molding of a thermoplastic resin, in which:
   the surface of the aluminum shape has a plurality of recesses derived from the irregularities;
   the molded resin has fitting portions formed in the recesses by entering of the thermoplastic resin followed by solidification during the injection molding of the thermoplastic resin; and
   the aluminum shape and the molded resin are locked with each other through the recesses and the fitting portion.

Further, the present invention is an integrally injection-molded aluminum/resin article, including:
an aluminum shape which is made of an aluminum alloy and has irregularities in a part or the whole of a surface; and
a molded resin which is integrally formed on the surface of the aluminum shape by injection molding of a thermoplastic resin, in which:
   the surface of the aluminum shape has a plurality of recesses each being formed owing to the irregularities and having an opening width of 0.1 µm or more and 30 µm or less and a depth of 0.1 µm or more and 30 µm or less, which are measured by observation using a scanning electron microscope, on a half line orthogonal to a thickness direction in a cross section of the aluminum shape in the thickness direction and positioned between a top line passing a highest portion of the irregularities and a bottom line passing a deepest portion of the irregularities;
   the molded resin has fitting portions formed in the recesses by entering of the thermoplastic resin followed by solidification during the injection molding of the thermoplastic resin; and
   the aluminum shape and the molded resin are fixed to each other through the recesses and the fitting portions.

In addition, the present invention is a process for producing an integrally injection-molded aluminum/resin article including an aluminum shape constituted of an aluminum alloy and a molded resin formed on a surface of the aluminum shape by injection molding of a thermoplastic resin, including:
performing an etching treatment on an aluminum alloy material to form an aluminum shape having a plurality of recesses derived from irregularities in a part or the whole of a surface;
molding fitting portions of the molded resin by entering of the thermoplastic resin into each of the plurality of recesses of the aluminum shape followed by solidification during the injection molding of the thermoplastic resin; and
producing an integrally injection-molded aluminum/resin article in which the recesses of the aluminum shape and the fitting portions of the molded resin are locked with each other to integrally bond the aluminum shape and the molded resin to each other.

### [With regard to integrally injection-molded aluminum/resin article]

In the present invention, specific examples of the aluminum alloy material for forming the aluminum shape include processed materials obtained by appropriately processing materials formed of pure Al 1000 series, Al-Cu 2000 series, Al-Mn 3000 series, Al-Si 4000 series, Al-Mg 5000 series, ADC 5, and ADC 6, Al-Mg-Si 6000 series, Al-Zn-Mg 7000 series, Al-Fe 8000 series, Al-Si-Mg ADC 3, Al-Si-Cu ADC 10, ADC 10Z, ADC 12, ADC 12Z, and Al-Si-Cu-Mg ADC 14 into desired shapes, and combined materials obtained by appropriately combining the processed materials.

In addition, in the present invention, the plurality of recesses formed in the surface of the aluminum shape owing to the irregularities in the surface of the aluminum shape may be hole-live or pore-like recesses each having an opening edge portion as an edgeless edge portion (recesses each having an edgeless opening edge portion), may also be slit-like or groove-like recesses each having an opening edge portion with both edged portions (recesses each having an edged opening edge portion), and may further include the hole-like or pore-like recesses each having the edgeless opening edge portion and the slit-like or groove-like recesses each having the edged opening edge portion in a mixed manner.

With regard to the plurality of recesses of the aluminum shape, a protrusion portion protruding in an overhang-like shape from a part or the whole of the opening edge portion of the recess toward the center in an opening width direction is preferably formed in a part or all of the plurality of recesses of the aluminum shape. With the protrusion portion, the opening width of the recess is narrower than the inner width dimension thereof, and the fitting portion of the molded resin that has penetrated into such recess and solidified forms a mutually undetachable locking structure with the recess so that the aluminum shape and the molded resin are not detached from each other unless one or both of the recess of the aluminum shape and the fitting portion of the molded resin is destroyed, and therefore the adhesion strength and air tightness between the aluminum shape and the molded resin are further improved.

Further, as described above, when the overhang-like protrusion potion described above is formed in the opening edge portion of a part or all of the plurality of recesses of the aluminum shaped, the fitting portion of the molded resin is not necessarily fitted in the recess in an adhering manner. For example, even when inevitable minute gaps are formed between the aluminum shape and the molded resin on the basis of a difference in linear expansion coefficient between the aluminum shape and the molded resin, and environmental temperatures, excellent adhesion strength and air tightness are maintained between the aluminum shape and the molded resin.

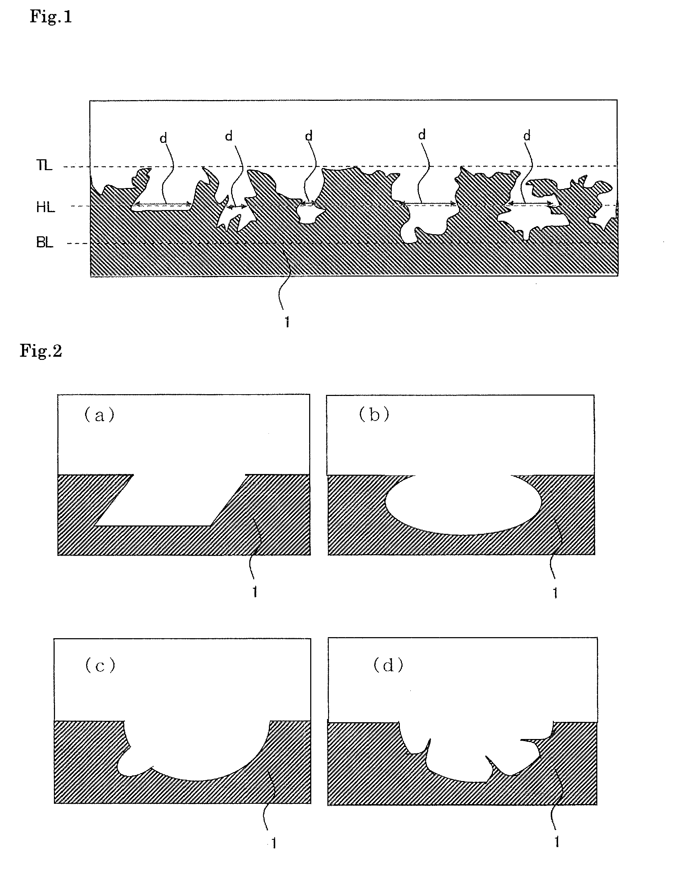

The plurality of recesses formed owing to the irregularities in the surface of the aluminum shape in the present invention are described below with reference to FIG. 1 schematically illustrating the cross section of the aluminum shape. On a half line (HL) that is orthogonal to a thickness direction in a cross section of an aluminum shape 1 in the thickness direction, and positioned between a top line (TL) passing the highest portion of the irregularities and a bottom line (BL) passing the deepest portion of the irregularities, an opening width (d) of each of the plurality of recesses measured by observation using a scanning electron microscope is 0.1 µm or more and 30 µm or less, preferably 0.5 µm or more and 20 µm or less, more preferably 1 µm or more and 10 µm or less, and a depth thereof is 0.1 µm or more and 30 µm or less, preferably 0.5 µm or more and 20 µm or less. When the opening width (d) of the recess is smaller than 0.1 µm, it becomes difficult for the molten resin to penetrate during the injection molding and a minute gap is formed at the interface between the aluminum shape 1 and the molded resin so that it becomes difficult to obtain excellent adhesion strength and air tightness. On the other hand, when the opening width (d) is larger than 30 µm, dissolution reaction excessively proceeds during a surface treatment (etching treatment) of the aluminum shape 1, a problem such as lack of a material surface or an increase in the reduction amount of board thickness of the material arises, and a product insufficient in material strength is produced, which leads to a reduction in productivity. In addition, when the depth is less than 0.1 µm, it is difficult to obtain the sufficient fitting portion of the molded resin. On the other hand, when the depth is larger than 30 µm, the dissolution reaction excessively proceeds during the surface treatment (the etching treatment) of the aluminum shape 1, and the problem such as the lack of the material surface or the increase in the reduction amount of board thickness of the material arises.

In the present invention, with regard to the density of the plurality of recesses formed owing to the irregularities in the surface of the aluminum shape, it is preferred to have about 5 to 200 recesses having one kind or two or more kinds of sizes in a range of 0.5 µm to 20 µm in opening width and in a range of 0.5 µm to 20 µm in depth in a 0.1 mm square area.

Further, in the aluminum shape of the present invention, when a large number of observation lines extending from the side of the molded resin toward the side of the aluminum shape in a thickness direction are drawn at intervals of 0.1 µm in a cross section of the integrally injection-molded aluminum/resin article in the thickness direction, the overhang-like protrusion portion formed in the recess preferably forms at least one laminated portion formed of resin-aluminum-resin layers on one observation line, the thickness of the aluminum shape portion of the laminated portion is preferably in a range of 0.1 µm or more and 30 µm or less, and at least one overhang-like protrusion portion is preferably present in a range of 1000 observation lines in the integrally injection-molded aluminum/resin article.

In addition, the plurality of recesses of the aluminum shape may have a double recess structure in which at least one internal recess is formed in an internal wall surface in a part or all of the plurality of recesses of the aluminum shape, may also have an internal irregular structure in which at least one internal protrusion portion is formed on the internal wall, or may further have the double recess structure and the internal irregular structure in combination. With such double recess structure and internal irregular structure present in a part or all of the plurality of recesses of the aluminum shape, the recesses of the aluminum shape and the fitting portions of the molded resin are bonded to each other more firmly, and more excellent adhesion strength and air tightness are exhibited between the aluminum shape and the molded resin.

### [With regard to process for producing integrally injection-molded aluminum/resin article]

In the present invention, when such integrally injection-molded aluminum/resin article is produced, the aluminum shape having the plurality of desired recesses described above in the surface is firstly formed, and there is given, as a process for producing the aluminum shape, a process in which an etching treatment is performed on an aluminum alloy material to form irregularities in a part of or the whole of the surface, and the aluminum shape having a plurality of recesses derived from the irregularities is formed.

In addition, there is given, as an etching liquid used for the etching treatment of the aluminum alloy material, an etching liquid including an acid aqueous solution of hydrochloric acid, phosphoric acid, sulfuric acid, acetic acid, oxalic acid, ascorbic acid, benzoic acid, butyric acid, citric acid, formic acid, lactic acid, isobutylic acid, malic acid, propionic acid, or tartaric acid. However, in order to control the recesses formed in the surface so as to have desired shapes and sizes such as forming a plurality of recesses each having the opening width and depth of desired sizes, or forming the overhang-like protrusion portion protruding toward the center in the opening width direction on the opening edge portion of a part or all of the recesses, an acid aqueous solution having relatively weak oxidizing power as the acid aqueous solution is used and, in order to dissolve an oxide film formed on the surface of the aluminum alloy material in such acid aqueous solution having relatively weak oxidizing power, the use of an etching liquid containing a halogen ion at a specific concentration is required.

That is, as the etching liquid, it is preferred to use an etching liquid containing one kind or two or more kinds of halogen ions selected from a chlorine ion (Cl⁻ a fluorine ion F⁻), and an iodine ion (I⁻) within specific concentration ranges in the acid aqueous solution having relatively weak oxidizing power. When the aluminum alloy material is immersed in the etching liquid using the acid aqueous solution having relatively weak oxidizing power containing such halogen ion, the halogen ion in the etching liquid firstly dissolves the oxide film on the surface of the aluminum alloy material and, thereafter, dissolves the inner aluminum alloy to further erode the internal portion of the aluminum alloy material. At this point, the inner aluminum alloy is more liable to erode (liable to dissolve) than the oxide film on the surface, and hence it is possible to control the opening width and the depth of each of the recesses derived from the irregularities formed in the surface so as to have desired sizes, and form the overhang-like protrusion portion protruding toward the center in the opening width direction on the opening edge portion of a part or all of the recesses by appropriately setting the composition of the etching liquid, conditions of the etching treatment, and the like.

Specific examples of the etching liquid used for this purpose include, as an acid aqueous solution, a hydrochloric acid aqueous solution, a phosphoric acid aqueous solution, a dilute sulfuric acid aqueous solution, and an acetic acid aqueous solution each having an acid concentration of 0.1 wt% or more and 80 wt% or less, preferably 0.5 wt% or more and 50 wt% or less, and an oxalic acid aqueous solution having an acid concentration of 5 wt% or more and 30 wt% or less, preferably 10 wt% or more and 20 wt% or less. In addition, there are given, as halides to be added to the acid aqueous solutions for the introduction of the halogen ion, chlorides such as sodium chloride, potassium chloride, magnesium chloride, and aluminum chloride, fluorides such as calcium fluoride, and bromides such as potassium bromide, and chlorides are preferred in consideration of safety and the like. The halogen ion concentration in the etching liquid is normally 0.5 grams/liter (g/L) or more and 300 g/L or less, preferably 1 g/L or more and 200 g/L or less. When the concentration is less than 0.5 g/L, the effect of the halogen ion is small so that a problem arises that the recess having the overhang-like protrusion portion is not formed on the opening edge portion. On the other hand, when the concentration is more than 300 g/L, the dissolution reaction rapidly proceeds during the surface treatment (etching treatment) of the aluminum shape so that a problem arises that it is difficult to control the recesses.

In the present invention, note that an aqueous solution of an acid having relatively strong oxidizing power such as nitric acid or concentrated sulfuric acid with a concentration of more than 80 wt%, and an aqueous solution of an alkali such as sodium hydroxide or potassium hydroxide are not appropriate as the etching liquid for forming the desired recesses in the surface of the aluminum shape. The acid aqueous solution having relatively strong oxidizing power has film forming ability for the aluminum alloy, and disadvantageously forms a firm oxide film on the surface of the aluminum shape so that it becomes difficult for the halogen ion to dissolve the oxide film. Further, a dissolution mechanism of the alkaline aqueous solution such as a sodium hydroxide or potassium hydroxide aqueous solution for the aluminum alloy is a uniform-dissolution mechanism and, even when the halogen ion is added, the tendency is not changed so that it becomes difficult to form the recesses each having a desired shape and size.

In the present invention, treatment conditions when the etching treatment is performed on the surface of the aluminum alloy material using the above-mentioned etching liquid are different depending on, for example, the type of the etching liquid to be used, the acid concentration, the halogen ion concentration, and the number and size of the plurality of recesses required for the aluminum shape in general, the immersion time is preferably 1 to 30 minutes at a bath temperature of 20 to 80°C for the hydrochloric acid aqueous solution, the immersion time is preferably 1 to 5 minutes at a bath temperature of 30 to 80°C for the phosphoric acid aqueous solution, the immersion time is preferably 2 to 8 minutes at a bath temperature of 40 to 80°C for the sulfuric acid aqueous solution, the immersion time is preferably 1 to 3 minutes at a bath temperature of 50 to 80°C for the oxalic acid aqueous solution, and the immersion time is preferably 1 to 3 minutes at a bath temperature of 50 to 80 °C for the acetic acid aqueous solution. As the acid concentration and the bath temperature of the etching liquid to be used are higher, the effect of the etching treatment becomes more prominent so that the time period required for the treatment can be reduced. However, when the bath temperature is less than 20°C, the dissolution speed is low and therefore the generation of the recesses having sufficient sizes (opening width and depth) requires a long period of time. On the other hand, when the bath temperature is more than 80°C, the dissolution reaction rapidly proceeds so that it becomes difficult to control the opening width and the depth of each recess. When the immersion time is less than 1 minute, it is difficult to control the opening width and the depth of each recess. On the other hand, the immersion time of more than 30 minutes leads to a reduction in productivity.

In the present invention, when the etching treatment is performed on the aluminum alloy material to form the aluminum shape having recesses as described above, a pretreatment based on an acid treatment using the acid aqueous solution and/or an alkaline treatment using the alkaline solution may be performed on the surface of the aluminum alloy material before the etching treatment on an as-needed basis for the purpose of degreasing, surface adjustment, and the removal of surface deposits, contaminants, and the like.

Here, as the acid aqueous solution used for the pretreatment, for example, there can be used a solution prepared using a commercially available acid degreasing agent, and solutions prepared using acid reagents including mineral acids such as sulfuric acid, nitric acid, hydrofluoric acid, and phosphoric acid, organic acids such as acetic acid and citric acid, and a mixed acid obtained by mixing the above-mentioned acids. As the alkaline aqueous solution, for example, there can be used a solution prepared using a commercially available alkaline degreasing agent, a solution prepared using an alkaline reagent such as sodium hydroxide, and a solution prepared by mixing the above-mentioned solutions.

An operation process and conditions of the pretreatment performed using the above-mentioned acid aqueous solutions and/or the alkaline aqueous solutions may be similar to those of a pretreatment conventionally performed using the acid aqueous solution or alkaline aqueous solution of these types, and the pretreatment can be performed by processes such as an immersion process and a spray process.

Further, after performing the abode-mentioned pretreatment on the surface of the aluminum alloy material or performing the etching treatment for forming the recesses, a rinsing treatment may be performed on an as-needed basis. In the rinsing treatment, there can be used, for example, industrial water, ground water, tap water, or ion-exchanged water, and the water is appropriately selected according to the aluminum shape to be produced. Furthermore, a drying treatment is performed on the aluminum alloy material having been subjected to the pretreatment or the etching treatment on an as-needed basis, and the drying treatment may be air-drying in which the aluminum alloy material is left standing at room temperature, or forced drying using, for example, an air blower, a dryer, or an oven.

In the surface of the aluminum shape obtained by the above-mentioned etching treatment, or the pretreatment and the etching treatment, the irregularities are formed by the etching treatment, and a 60° surface gloss of the surface (measured using a handy glossmeter manufactured by Suga Test Instruments Co. , Ltd.) is preferably 60 or less. When the surface gloss is more than 60, the resin melted during the injection molding of the thermoplastic resin does not sufficiently penetrate into the recesses of the aluminum shape. As a result, sufficient bonding strength can not be obtained at the interface between the aluminum shape and the molded resin.

Further, in a cross-sectional observation micrograph obtained by performing cross-sectional observation of the surface of the aluminum shape obtained by the above-mentioned etching treatment or the pretreatment and the etching treatment using a SEM or an optical microscope at a magnification of 1000 times, the surface area of the aluminum shape is preferably 1.2 times or more and 10 times or less that of the aluminum alloy material before the formation of the irregularities by the etching treatment. When the surface area increase ratio is less than 1.2 times or more than 10 times, the resin melted during the injection molding of the thermoplastic resin does not sufficiently penetrate into the recesses of the aluminum shape. As a result, sufficient bonding strength can not be obtained at the interface between the aluminum shape and the molded resin.

Subsequently, in order to obtain the integrally injection-molded aluminum/resin article of the present invention, by what is called integral molding of the thermoplastic resin using the aluminum shape in which the thus-obtained aluminum shape is set in an injection molding mold, and a melted specific resin is injected into the mold and solidified, the integrally injection-molded article of the aluminum shape and the molded resin of concern is produced. In the present invention, a particularly preferred integrally injection-molded article is an integrally injection-molded article including a molded resin bonded to the surface of a part of the aluminum shape in a butting manner by injection molding of the thermoplastic resin.

Here, as the thermoplastic resin for producing the integrally injection-molded aluminum/resin article of the present invention, various thermoplastic resins can be used solely. However, in consideration of physical properties required of the integrally injection-molded aluminum/resin article of the present invention, use thereof, and usage environment thereof, examples of the thermoplastic resin preferably include a polypropylene resin, a polyethylene resin, an acrylonitrile-butadiene-styrene copolymer (ABS), a polycarbonate resin, a polyamide resin, a polyarylene sulfide resin such as a polyphenylene sulfide (PPS), a polyacetal resin, a liquid crystal resin, polyester-based resins such as polyethylene terephthalate (PET) and polybutylene terephthalate (PBT), a polyoxymethylene resin, a polyimide resin, a syndiotactic polystyrene resin, and a mixture of two or more kinds of the thermoplastic resins described above. Further, in order to improve performance such as adhesion between the aluminum shape and the molded resin, mechanical strength, heat resistance, dimensional stability (resistance to deformation, warpage, or the like), and electric properties, it is more preferred to add a fibrous, granular, or plate-like filler, or various elastomer components to those thermoplastic resins.

In addition, examples of the filler to be added to the thermoplastic resin include: inorganic fibrous fillers such as a glass fiber, a carbon fiber, a metal fiber, an asbestos fiber, and a boron fiber; high-melting organic fibrous fillers such as a polyamide, a fluorine resin, and an acrylic resin; granular fillers such as inorganic powders represented by ground quartz, a glass bead, a glass powder, and calcium carbonate; and plate-like fillers such as glass flake and silicates or the like represented by talc, and mica. The filler is added to the thermoplastic resin in a range of 250 parts by weight or less, preferably in a range of 20 parts by weight or more and 220 parts by weight or less, more preferably in a range of 30 parts by weight or more and 100 parts by weight or less relative to 100 parts by weight of the thermoplastic resin. When the amount of the added filler is more than 250 parts by weight, fluidity is lowered and it becomes difficult for the thermoplastic resin to penetrate into the recesses of the aluminum shape so that a problem arises that excellent adhesion strength can not be obtained or mechanical properties are lowered.

Further, examples of the elastomer component to be added to the thermoplastic resin include urethane-based, core-shell type, olefin-based, polyester-based, amide-based, and styrene-based elastomers. The elastomer component is selected in consideration of the melt temperature of the thermoplastic resin during the injection molding. Further, the elastomer component is used in a range of 30 parts by weight or less, preferably in a range of 3 to 25 parts by weight relative to 100 parts by weight of the thermoplastic resin. When the amount of the added elastomer component is more than 30 parts by weight, the effect of a further improvement in adhesion strength is no longer achieved and a problem arises that the mechanical properties are lowered or the like. The effect of addition of the elastomer component is conspicuously seen when the polyester-based resin is used as the thermoplastic resin.

Furthermore, to the thermoplastic resin used for producing the integrally injection-molded aluminum/resin article of the present invention, there can be appropriately added known additives that are normally added to thermoplastic resins, i.e., a fire retardant additive, coloring agents such as a dye and a pigment, stabilization agents such as an antioxidant and an ultraviolet absorbing agent, a plasticizing agent, a lubricant, a slip additive, a mold lubricant, a crystallization accelerator, and a nucleating agent in accordance with required performance.

In the present invention, with regard to the injection molding of the thermoplastic resin that is performed by setting the aluminum shape in the injection molding mold, normal molding conditions required for the thermoplastic resin to be used can be adopted. However, it is important that the thermoplastic resin melted during the injection molding reliably penetrates into the recesses of the aluminum shape and solidifies. Accordingly, it is preferred to set a mold temperature and a cylinder temperature to relatively high values within a range permitted by the type and physical properties of the thermoplastic resin and a molding cycle as well. In particular, with regard to the mold temperature, the lower limit thereof needs to be 90°C or more, preferably 130°C or more, while the upper limit thereof is, according to the type of the thermoplastic resin to be used, preferably in a range from 100°C to a temperature lower by about 20°C than the melting point or the softening point (the higher melting point or softening point when the elastomer component is added) of the thermoplastic resin. In addition, the lower limit of the mold temperature is preferably set to a value lower by less than 140°C than the melting point of the thermoplastic resin.

### ADVANTAGEOUS EFFECTS OF INVENTION

The integrally injection-molded aluminum/resin article of the present invention has extremely high adhesion strength and air tightness at the interface (aluminum/resin interface) between the aluminum shape and the molded resin, and is capable of retaining the excellent adhesion strength and air tightness even when the article is exposed to a harsh environment and maintaining high reliability for a long period of time. Consequently, the integrally injection-molded aluminum/resin article of the present invention can be suitably used in integrally molded metal-resin components in a wide range of fields represented by, e.g., various sensor components for automobiles, various switch components for household electric appliances, and capacitor components for various industrial equipment, and is particularly suitably used in an integrally molded metal-resin component in which a molded resin protrudes from the surface of a part of an aluminum shape in a butting manner so that high bonding strength is required.

In addition, according to the process for producing an integrally injection-molded aluminum/resin article of the present invention, by measuring the surface gloss or the surface roughness of the aluminum shape during the production process, adhesion strength of an obtained product can be predicted, quality control during the production process can be facilitated, and, in addition, highly reliable products almost without variations in adhesion strength can be produced.

### BRIEF DESCRIPTION OF DRAWINGS

[FIG. 1] FIG. 1 is a cross-sectional schematic view obtained by copying a cross section in a thickness direction of an aluminum shape according to Example 1 and illustrating recesses.

[FIGS.2] FIGS. 2 are cross-sectional explanatory diagram illustrating typical examples of shapes of the recesses observed in FIG. 1.

[FIG. 3] FIG. 3 has an front elevational view and a side view of an aluminum/resin test piece (integrally injection-molded aluminum/resin article) prepared for a shear fracture load measurement test by using an aluminum test piece A (aluminum shape).

[FIG. 4] FIG. 4 is a perspective explanatory diagram illustrating a state in which the aluminum/resin test piece is fixed on a test piece fixing jig when the shear fracture load measurement test is conducted.

[FIG. 5] FIG. 5 has a plan view and a side view of an aluminum/resin test piece (integrally injection-molded aluminum/resin article) prepared for an air tightness evaluation test by using an aluminum test piece B (aluminum shape).

[FIG. 6] FIG. 6 is a cross-sectional explanatory diagram illustrating a state in which the aluminum/resin test piece is set in a test piece setting portion of an air tightness evaluation test apparatus when the air tightness evaluation test is conducted.

[FIG. 7] FIG. 7 is a cross-sectional schematic view obtained by copying a cross section in a thickness direction of an aluminum shape according to each of Comparative Examples 1, 4, and 5.

[FIG. 8] FIG. 8 is a cross-sectional schematic view obtained by copying a cross section in a thickness direction of an aluminum shape according to Comparative Example 2.

[FIG. 9] FIG. 9 is a cross-sectional schematic view obtained by copying a cross section in a thickness direction of an aluminum shape according to Comparative Example 3.

[FIG. 10] FIG. 10 is a cross-sectional schematic view obtained by copying a cross section in the thickness direction of the aluminum shape according to Example 1.

[FIG. 11] FIG. 11 has a plan view and a side view of an aluminum/resin test piece (integrally injection-molded aluminum/resin article) prepared for the shear fracture load measurement test by using an aluminum test piece C (aluminum shape).

[FIG. 12] FIG. 12 is a side view illustrating a state in which the aluminum/resin test piece is fixed on a test piece fixing jig when the shear fracture load measurement test is conducted.

### REFERENCE SIGNS LIST

1 ··· aluminum shape, 1A ··· aluminum test piece A, 1B ··· aluminum test piece B, 1C ··· aluminum test piece C, TL ··· top line, BL ··· bottom line, HL ··· half line, d ··· opening width, OL ··· observation line, 2 ··· molded resin, 2a ··· flange-like bonding portion, 2b ··· tubular portion, 3 ··· test piece fixing jig, 4 ··· resin-buried portion, 5 ··· test piece setting portion, 6 ··· pressurized air introduction port, 7 ··· O-ring, 8 ··· test piece fixing jig, 9 ··· driving jig, 10 ··· bonding portion.

### DESCRIPTION OF EMBODIMENTS

A suitable embodiment of the present invention is specifically described herein below based on examples and comparative examples. Note that the present invention is not limited to the examples described below.

### [Example 1]

### [Preparation of aluminum shape]

An aluminum piece A (aluminum alloy material) having dimensions of 50 mm×50 mm and an aluminum piece B (aluminum alloy material) having dimensions of 2 mm×35 mm were cut out from an aluminum alloy (JISA 1050-H24) plate having a thickness of 1 mm. The aluminum pieces A and B were subjected to a pretreatment in which the aluminum pieces A and B were sufficiently rinsed using ion-exchanged water after being firstly immersed in a 30 wt% nitric acid aqueous solution for 5 minutes at room temperature, then rinsed after being immersed in a 5 wt% sodium hydroxide solution for 1 minute at 50°C, and further rinsed after being immersed in the 30 wt% nitric acid aqueous solution for 3 minutes at room temperature.

Subsequently, the aluminum pieces A and B after the above-mentioned pretreatment were subj ected to an etching treatment in which the aluminum pieces A and B were rinsed after being immersed in an etching liquid (chlorine ion concentration: 48 g/L) prepared by adding a 54 g/L aluminum chloride hexahydrate (AlCl₃·6H₂O) to a 2.5 wt% hydrochloric acid aqueous solution for 4 minutes at 66°C, further rinsed after being immersed in the 30 wt% nitric acid aqueous solution for 3 minute at room temperature, and then dried for 5 minutes using hot air of 120°C, whereby aluminum test pieces A and B (aluminum shape) for preparing evaluation samples for a shear fracture load measurement test and an air tightness evaluation test were prepared.

### [Observation of recesses in surfaces of aluminum test pieces A and B (aluminum shape)]

A cross section of a certain region of a cross section of each of the obtained aluminum test pieces A and B in a thickness direction was observed using a scanning electron microscope (FE-SEM, S-4500 manufactured by Hitachi, Ltd.). First, in the cross section of the aluminum shape in the thickness direction, a top line (TL) orthogonal to the thickness direction and passing the highest portion of irregularities was determined, and then a bottom line orthogonal to the thickness direction of the aluminum shape and passing the deepest portion of the irregularities was determined in a manner similarly to the above description. Further, a line segment was vertically drawn from the top line (TL) to the bottom line (BL), and a distance of a gap present between the aluminum shapes on a half line (HL) passing the middle portion of the line segment and drawn in parallel with the top line (TL) [or the bottom line (BL)] was determined as an opening width (d) of the recess. Then, shapes and sizes (opening width and depth) of recesses formed from the irregularities in the surface of each of the aluminum test pieces A and B were observed and measured.

The cross section of a certain region of each of the observed aluminum test pieces A and B was as illustrated in, e.g., the cross-sectional schematic view of FIG. 1, and typical examples of shapes of the recesses observed in FIG. 1 included, as illustrated in FIGS. 2, a recess having a protrusion portion protruding in an overhang-like shape from a part of an opening edge portion toward a center in an opening width direction (shape a: see FIG. 2(a)), a recess having a protrusion portion protruding in an overhang-like shape from the entire opening edge portion toward the center in the opening width direction (shape b: see FIG. 2 (b)), a recess having a double recess structure in which a recess is further formed internally (shape c: see FIG. 2 (c)), and a recess having an internal irregular structure in which an internal protrusion portion is formed on an internal wall surface (shape d: see FIG. 2(d)). In Example 1, recesses having all of the shapes a tod were observed. In addition, even when the observation position was changed, the same result was obtained with regard to the shapes of the recesses.

In the evaluation of the observed shapes of the recesses, a case where one or more than one of the above-mentioned shapes a to d were included was evaluated as excellent (o), while a case where none of the above-mentioned shapes a to d was included was evaluated as poor (x). The shapes of the recesses observed in Examples 2 to 17 and Comparative Examples 1 to 7 described below were evaluated with the same criterion.

Further, with regard to sizes (opening width and depth) and proportions of the recesses observed in the cross section of a certain region of each of the measured aluminum test pieces A and B, in a 0.1-mum square area, the number of recesses each having an opening width of 0.1 µm to 1 µm was 10 to 100, the number of recesses each having an opening width of 1 µm to 10 µm was 1 to 10, the number of recesses each having an opening width of 11 µm to 30 µm was 1 to 3, and the depth of each of the recesses was in a range of 0.1 µm to 30 µm. Further, with regard to sizes (opening width and depth) and proportions of the internal recesses constituting the double recess structure, similarly to the above description, in a 0.1-mm square area, the number of recesses each having an opening width of 0.1 µm to 1 µm was 10 to 50, the number of recesses each having an opening width of 1 µm to 10 µm was 1 to 50, the number of recesses each having an opening width of 11 µm to 30 µm was 1 to 2, and the depth of each of the recesses was in a range of 0.1 µm to 20 µm. The sizes of the recesses were scarcely changed even when the observation position was changed.

With regard to the evaluation of sizes of the observed recesses, a case where the size fell in a range of 0.1 to 30 µm in opening width and 0.1 to 30 µm in depth was evaluated as excellent (o), while other cases were evaluated as poor (×). Note that the sizes of the recesses observed in Examples 2 to 17 and Comparative Examples 1 to 7 described below were also evaluated with the same criterion.

### [Evaluation of surface gloss of aluminum test pieces A and B (aluminum shape)]

The 60° gloss of the surface of each of the obtained aluminum test pieces A and B was measured using a handy glossmeter (manufactured by Suga Test Instruments Co., Ltd.). On the basis of a criterion that a case where the value of the 60° gloss was 60 or less was evaluated as excellent (o), while a case where the value was more than 60 was evaluated as poor (×), the evaluation was made, and the results of the evaluation were excellent (o).

### [Evaluation of surface area increase ratios of aluminum test pieces A and B (aluminum shape)]

Cross-sectional observation was performed for the obtained aluminum test pieces A and B using a SEM or an optical microscope at a magnification of 1000 times, and surface areas of the surfaces of the aluminum shapes were measured using image processing software (ImageJ) from the obtained cross-sectional observation micrographs. An increase ratio of surface area of the surface of the aluminum test piece relative to the surface area of a raw aluminum alloy material was defined as a surface area increase ratio. Note that surface area increase ratios of the recesses observed in Examples 13 to 17 and Comparative Examples 1 to 7 described below in which an aluminum test piece C was used were also measured using the same criterion.

### [Shear fracture load measurement test]

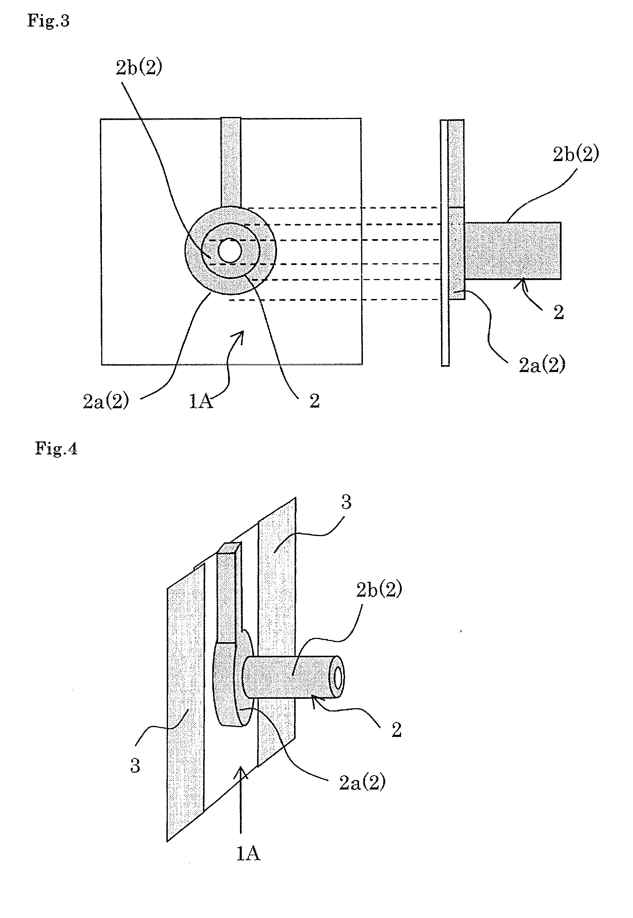

The obtained aluminum test piece A (aluminum shape) was set in a mold of an injection molding machine (TR40VR manufactured by Sodick Plustech Co., Ltd.), and injection molding was performed by using, as the thermoplastic resin, a polyphenylene sulfide resin containing an inorganic filler and an elastomer component (resin A), a polyphenylene sulfide resin containing an inorganic filler (resin B), or a polyphenylene sulfide resin containing an inorganic filler (resin C) under conditions of injection time (including dwell time) of 7 seconds, an injection speed of 80 mm/second, a dwell pressure of 100 MPa, a molding temperature of 320°C, and a mold temperature of 159°C, whereby, as illustrated in FIG. 3, there was prepared an aluminum/resin test piece (integrally injection-molded aluminum/resin article) for the shear fracture load measurement test in which an aluminum test piece A (1A) having dimensions of 50 mmx50 mm×1 mm, and a molded resin (2) including a flange-like bonding portion (2a) having dimensions of 15 mm in outer diameter×5 mm in inner diameter×2 mm in thickness and adhering to the surface of the aluminum test piece A (1A) and a tubular portion (2b) protruding from the flange-like bonding portion (2a) and having dimensions of 10 mm in outer diameter×18 mm in length were integrated together.

### [Preparation process of resins A to C]

As shown in Table 1 below, after the following components a to c were mixed using a Henschel mixer for 5 minutes and the obtained mixture was charged into a twin screw extruder with a cylinder temperature of 320°C, a component d was added separately from a side feed portion of the extruder, and melt kneading was performed to prepare resins in pellets.

**[Table 1]**

| Component proportion (part by weight) | Resin A | Resin B | Resin C |
|---|---|---|---|
| a: PPS resin | 100 | 100 | 100 |
| b: Elastomer (b-1) | 6 | - | - |
| b: Elastomer (b-2) | 10 | - | - |
| c: Mold lubricant | 0.7 | 0.5 | 0.9 |
| d: Inorganic filler (d-1) | 60 | 66 | 100 |
| d: Inorganic filler (d-2) | 60 | - | - |
| d: Inorganic filler (d-3) | - | - | 100 |

### Details of the components a to d are as described below.

Component a: polyphenylene sulfide (PPS) resin (Fortron KPS manufactured by KUREHA CORPORATION, melting point: 280°C, resin temperature: 310°C, melting viscosity at a shear rate of 1200 sec⁻¹: 30 Pa·s).

### Component b: elastomer

b-1: copolymer obtained by grafting 30 parts by weight of methyl methacrylate-butyl acrylate copolymer with 70 parts by weight of ethylene-glycidyl methacrylate copolymer (MODIPER A4300 manufactured by NOF CORPORATION).
b-2: ethylene-octene copolymer (ENGAGE 8440 manufactured by DuPont Dow Elastomers L.L.C.).

Component c: mold lubricant (Unistar H-476 manufactured by NOF CORPORATION).

### Component d: inorganic filler

d-1: glass fiber [10 µmϕ chopped strand (CS03JA-FT663 manufactured by Fiber Glass Japan Kabushiki Kaisha)]
d-2: glass flake (E GLASS manufactured by Nippon Sheet Glass Co., Ltd., average particle diameter: 600 µm)
d-3: calcium carbonate (Whiton P-30 manufactured by Toyo Fine Chemical Co., Ltd., average particle diameter: 4 µm)

By using a shear fracture load measurement test apparatus (Tensilon UTA-50KN-RTC manufactured by ORIENTEC Co., Ltd.), as illustrated in FIG. 4, the above-mentioned aluminum/resin test piece for the shear fracture load measurement test was fixed on test piece fixing jigs (3) of the apparatus, a load was applied to the tubular portion (2b) at a position apart from the flange-like bonding portion (2a) by 4mm, and a peel state of the bonding portion between the aluminum test piece A (1A) and the molded resin (2) was examined. On the basis of a criterion that a case where the peel was cohesion failure in which the resin was left on the side of the aluminum test piece was evaluated as excellent (o), and a case where the peel occurred at the bonding interface without the resin left on the side of the aluminum test piece was evaluated as poor (×), the observed peel state was evaluated, and the result was excellent (o) in all cases.

### [Air tightness evaluation test]

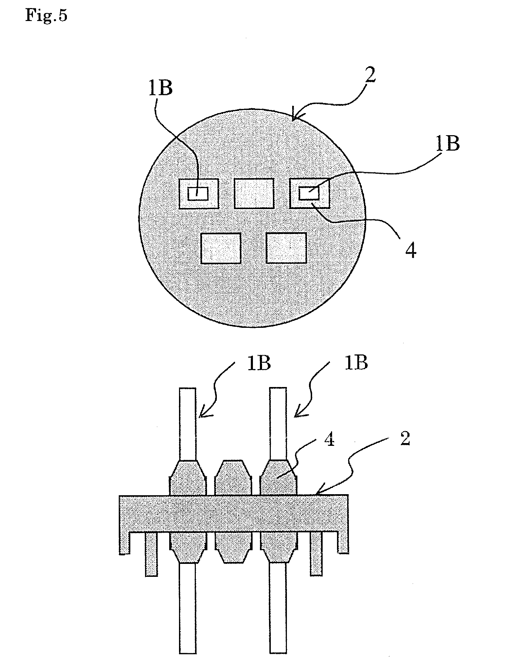

Further, two of the obtained aluminum test pieces B (aluminum shape) were set in a mold of an injection molding machine (SG-50 manufactured by Sumitomo Heavy Industries, Ltd.) and, as illustrated in FIG. 5, there was prepared an aluminum/resin test piece (integrally injection-molded aluminum/resin article) for the air tightness evaluation test formed of two aluminum test pieces B (1B) and the molded resin (2) through which the two aluminum test pieces B (1B) extended at resin-buried portions (4) each having a length of 17 mm in the same manner as in the case of the above-mentioned aluminum/resin test piece (integrally injection-molded aluminum/resin article) for the shear fracture load measurement test except that injection molding was performed under conditions of injection time (including dwell time) of 15 seconds, an injection speed of 17 mm/second, a dwell pressure of 70 MPa, a molding temperature of 320°C, and a mold temperature of 159°C.

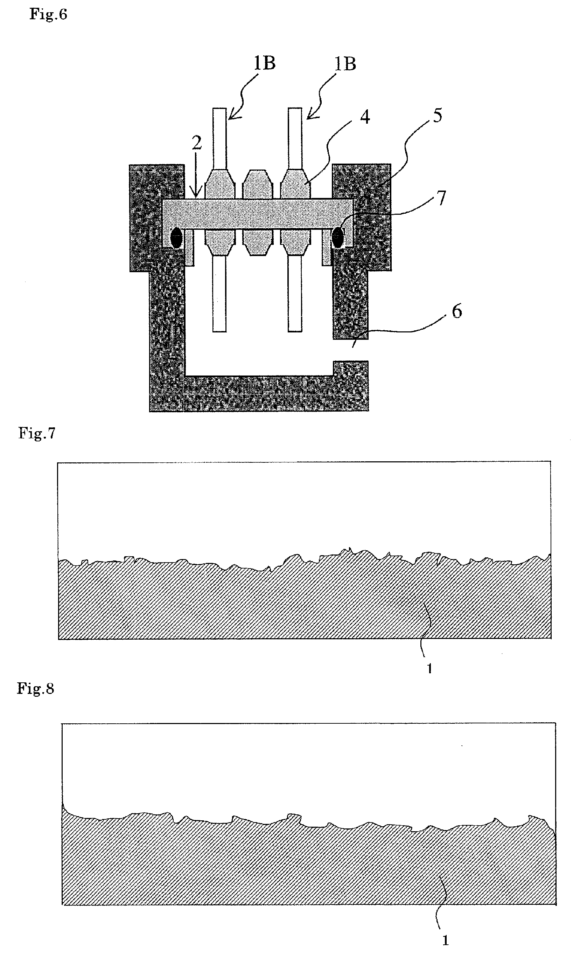

As illustrated in FIG. 6, by using an air tightness evaluation test apparatus made of SUS that is formed of a tubular body with one opened end and has a test piece setting portion (5) in an opening edge portion and a pressurized air introduction port (6) in the vicinity of a bottom portion, the above-mentioned aluminum/resin test piece for the air tightness evaluation test was set in the test piece setting portion (5) via an O-ring (7), compressed air was introduced through the pressurized air introduction port (6) using a regulator, and an internal air pressure was increased up to 0. 6 MPa while the internal pressure was maintained at the same level for 1 minute every time the internal air pressure was increased by 0.1 MPa. During the operation, it was measured whether or not air was leaked from the interfaces between the aluminum test pieces B (1B) in the resin buried portions (4) and the molded resin (2) in the aluminum/resin test piece. On the basis of a criterion that a case where air leakage was not measured even when the internal air pressure reached 0. 6 MPa was evaluated as excellent (o), while a case where the air leakage was measured before the internal air pressure reached 0.6 MPa was evaluated as poor (×), the evaluation was made, and the result of the evaluation was excellent (o) in all cases.

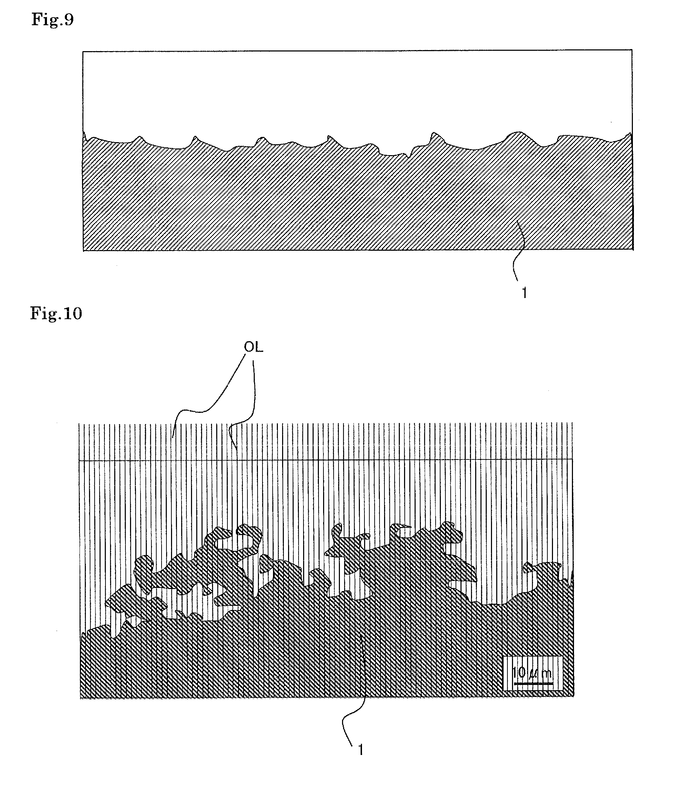

In addition, as illustrated in FIG. 10, the aluminum/resin test piece prepared for the shear fracture load measurement test was cut in the thickness direction, the cross section in the thickness direction was observed using a SEM or an optical microscope at a magnification of 1000 times, and a large number of observation lines (OL) extending in the thickness direction from the side of the molded resin 2 to the side of the aluminum shape 1 were drawn at intervals of 0.1 µm in the obtained cross-sectional observation micrograph. Then, on the basis of a criterion that a case where one or more laminated portions each formed of resin-aluminum-resin layers were present on one observation line (OL), the thickness of the aluminum shape portion of each of the laminated portions was in a range of 0.1 µm or more and 30 µm or less, and one or more such laminated portions were present in a range of 1000 observation lines (OL) was evaluated as excellent (o), while a case where there was no such laminated portion present in the range of 1000 observation lines (OL) was evaluated as poor (×), the evaluation was made, and the result of the evaluation was excellent (o) in all cases. Note that the evaluation was made with the same criterion in Examples 2 to 17 and Comparative Examples 1 to 7 described below.

### [Example 2]

Aluminum test pieces A and B (aluminum shape) were prepared in the same manner as in Example 1 described above except that JIS A1100-H14 was used as the aluminum alloy plate from which the aluminium pieces A and B were cut out. An aluminum/resin test piece (integrally injection-molded aluminum/resin article) for each of the shear fracture load measurement test and the air tightness evaluation test was then prepared using the resin A. The observation of the recesses in the surfaces of the above-mentioned aluminum/resin test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and evaluation was made in each case.
The results thereof are shown in Table 5 together with the results in Example 1.

### [Example 3]

Aluminum test pieces A and B (aluminum shape) were prepared in the same manner as in Example described above except that JIS A5052-H34 was used as the aluminum alloy plate from which the aluminum pieces A and B were cut out. An aluminum/resin test piece (integrally injection-molded aluminum/resin article) for each of the shear fracture load measurement test and the air tightness evaluation test was then prepared using the resin A. The observation of the recesses in the surfaces of the above-mentioned aluminum/resin test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and evaluation was made in each case.
The results thereof are shown in Table 5 together with the results in Example 1.

### [Example 4]

Aluminum test pieces A and B (aluminum shape) were prepared in the same manner as in Example 1 described above except that an etching liquid (chlorine ion concentration: 30 g/L) prepared by adding 50 g/L sodium chloride to a 50 wt% phosphoric acid aqueous solution was used in the etching treatment. An aluminum/resin test piece (integrally injection-molded aluminum/resin article) for each of the shear fracture load measurement test and the air tightness evaluation test was then prepared using the resin A. The observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and evaluation was made in each case.
The results thereof are shown in Table 5 together with the results in Example 1.

### [Example 5]

Aluminum test pieces A and B (aluminum shape) were prepared in the same manner as in Example 1 described above except that an etching liquid (chlorine ion concentration: 30 g/L) prepared by adding 50 g/L sodium chloride to a 10 wt% sulfuric acid aqueous solution was used in the etching treatment. An aluminum/resin test piece (integrally injection-molded aluminum/resin article) for each of the shear fracture load measurement test and the air tightness evaluation test was then prepared using the resin A. The observation of the recesses in the surfaces of the above-mentioned aluminum testpiecesAandB, the gloss measurement thereof, and the measurement of the surface area increase ratios thereof were performed. In addition, the shear fracture load measurement test and the air tightness evaluation test of the above-mentioned aluminum/resin test pieces were conducted, and evaluation was made in each case.
The results thereof are shown in Table 5 together with the results in Example 1.

### [Example 6]

Aluminum test pieces A and B (aluminum shape) were prepared in the same manner as in Example 1 described above except that an etching liquid (chlorine ion concentration: 30 g/L) prepared by adding 50 g/L sodium chloride to a 30 wt% oxalic acid aqueous solution was used in the etching treatment. An aluminum/resin test piece (integrally injection-molded aluminum/resin article) for each of the shear fracture load measurement test and the air tightness evaluation test was then prepared using the resin A. The observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and evaluation was made in each case.
The results thereof are shown in Table 5 together with the results in Example 1.

### [Example 7]

The aluminum/resin test piece (integrally injection-molded aluminum/resin article) for the shear fracture load measurement test was prepared in the same manner as in Example 1 described above except that a polybutylene terephthalate resin containing an inorganic filler (resin D), a polybutylene terephthalate resin containing an inorganic filler and an elastomer component (resin E), and a polybutylene terephthalate resin containing an inorganic filler, an amorphous resin, and an elastomer component (resin F) were used as the thermoplastic resin, and the molding temperature and the mold temperature shown in Table 5 were adopted as molding conditions, and the observation of the recesses in the surface of the above-mentioned aluminum test piece A, the gloss measurement thereof, and the measurement of the surface area increase ratio thereof were performed. In addition, the shear fracture load measurement test of the above-mentioned aluminum/resin test piece was conducted, and the evaluation was made.
The results thereof are shown in Table 5 together with the results in Example 1.

### [Preparation process of resins D to F]

As shown in the following Table 2, after components a to c were mixed using the Henschel mixer for 5 minutes and the obtained mixture was then charged into the twin screw extruder with a cylinder temperature of 260°C, a component d was added separately from the side feed portion of the extruder, and the melt kneading was performed to prepare resins in pellets.

**[Table 2]**

| Component proportion (part by weight) | Resin D | Resin E | Resin F |
|---|---|---|---|
| a: PBT resin (a-1) | 100 | 100 | - |
| a: PBT resin (a-2) | - | - | 100 |
| b: Elastomer (b-1) | - | 16.5 | - |
| b: Elastomer (b-2) | - | - | 9 |
| c: Amorphous resin | - | - | 23 |
| d: Inorganic filler | 40 | 50 | 55 |

Details of the components a to d are as described below.
Component a: polybutylene terephthalate (PBT) resin
a-1: polybutylene terephthalate resin (manufactured by Wintech Polymer Ltd., melting point: 225°C, and intrinsic viscosity of 0.7 dl/g)
a-2: polybutylene terephthalate copolymer modified with 12.5 mol% isophthalic acid (manufactured by Wintech Polymer Ltd., melting point; 205°C, and intrinsic viscosity: 0.74 dl/g)
Component b: elastomer
b-1: copolymer obtained by grafting 70 parts by weight of ethylene-ethyl acrylate copolymer with 30 parts by weight of methyl methacrylate-butyl acrylate copolymer (MODIPER A5300 manufactured by NOF CORPORATION)
b-2: polyester elastomer (PELPRENE P90BD manufactured by TOYOBO CO., LID.)
Component c: amorphous resin [polycarbonate resin (Panlite 1225WX manufactured by Teijin Chemicals Ltd.)]
Component d: inorganic filler [glass fiber (13 µmΦ) chopped strand (ECS03T187 manufactured by Nippon Electric Glass Co., Ltd.)]

### [Example 8]

The aluminum/resin test piece (integrally injection-molded aluminum/resin article) for the shear fracture load measurement test was prepared in the same manner as in Example 1 described above except that a polyacetal resin containing an inorganic filler (resin G), and a polyacetal resin containing an elastomer component (resin H) were used as the thermoplastic resin, and the molding temperature and the mold temperature shown in Table 5 were adopted as molding conditions, and the observation of the recesses in the surface of the above-mentioned aluminum test piece A, the gloss measurement thereof, and the measurement of the surface area increase ratio thereof were performed. In addition, the shear fracture load measurement test of the above-mentioned aluminum/resin test piece was conducted, and the evaluation was made.
The results thereof are shown in Table 5 together with the results in Example 1.

### [Preparation process of resins G and H]

As shown in the following Table 3, after components a and b were mixed using the Henschel mixer for 5 minutes and the obtained mixture was then charged into the twin screw extruder with a cylinder temperature of 210°C, a component c was added separately from the side feed portion of the extruder, and the melt kneading was performed to prepare resins in pellets.

**[Table 3]**

| Component proportion (part by weight) | Resin G | Resin H |
|---|---|---|
| a: Polyacetal resin (a-1) | 100 | - |
| a: Polyacetal resin (a-2) | - | 100 |
| b: Elastomer | - | 30 |
| c: Inorganic filler | 33 | - |

Details of the components a to c are as described below.
Component a: polyacetal resin
a-1: polyacetal resin [manufactured by Polyplastics Co., Ltd., melting point: 160°C, and melt index (190C): 45g/10 min.]
a-2: polyacetal resin [manufactured by Polyplastics Co. , LTd., melting point: 160°C, and melt index (190°C): 27g/10 min.]
Component b: elastomer [thermoplastic polyurethane resin (Miractran P480RNAT manufactured by Nippon Miractran Co, Ltd.)]
Component c: inorganic filler [glass fiber {10 µmΦ chopped strand (CS03FT-102 manufactured by Fiber Glass Japan Kabushiki Kaisha)}]

### [Example 9]

The aluminum/resin test piece (integrally injection-molded aluminum/resin article) for the shear fracture load measurement test was prepared in the same manner as in Example 1 described above except that liquid crystal resins each containing an inorganic filler (resins I to K) were used as the thermoplastic resin, and the molding temperature and the mold temperature shown in Table 6 were adopted as molding conditions, and the observation of the recesses in the surface of the above-mentioned aluminum test piece A, the gloss measurement thereof, and the measurement of the surface area increase ratio thereof were performed. In addition, the shear fracture load measurement test of the above-mentioned aluminum/resin test piece was conducted, and the evaluation was made.
The results thereof are shown in Table 6 together with the results in Example 1.

### [Preparation process of resins I to K]

As shown in the following Table 4, after components a and b were mixed using the Henschel mixer for 5 minutes and the obtained mixture was then charged into the twin screw extruder, a component c was added separately from the side feed portion of the extruder, and the melt kneading was performed to prepare resins in pellets. Note that the cylinder temperature of the biaxial extruder was set to 340°C when resins I and J were prepared, and was set to 290°C when a resin K was prepared.

**[Table 4]**

| Component proportion (part by weight) | Resin I | Resin J | Resin K |
|---|---|---|---|
| a: Liquid crystal resin (a-1) | 100 | 100 | - |
| a: Liquid crystal resin (a-2) | - | - | 100 |
| b: Mold lubricant | 0.4 | 0.5 | 0.6 |
| c: Inorganic filler (c-1) | 40 | 30 | - |
| c: Inorganic filler (c-2) | - | 20 | - |
| c: Inorganic filler (c-3) | - | - | 50 |

Details of the components a to c are as described below.
Component a: liquid crystal resin
a-1: liquid crystal resin E950i (manufactured by Polyplastics Co., Ltd., melting point: 335°C)
a-2: liquid crystal resin A950 (manufactured by Polyplastics Co., Ltd., melting point: 280°C)
Component b: mold lubricant (Unistar H-476 manufactured by NOF CORPORATION)
Component c: inorganic filler
c-1: glass fiber [10 µmΦ chopped strand (ECS03T-786H manufactured by Nippon Electric Glass Co., Ltd.)]
c-2: talc (Crown Talc PP manufactured by Matsumura Sangyo Co., Ltd., average particle diameter: 10 µm)
c-3: synthetic silica (SC2000-ZD manufactured by Admatechs, average particle diameter: 0.5 µm)

### [Example 10]

The aluminum/resin test piece (integrally injection-molded aluminum/resin article) for the shear fracture load measurement test was prepared in the same manner as in Example 1 described above except that a polyamide resin containing a 30 wt% glass fiber (resin L: AMILAN 3001G30 manufactured by TORAY INDUSTRIES, INC.), and a polyamide resin containing a 50 wt% glass fiber (resin M: Reny 1025 manufactured by Mitsubishi Engineering-Plastics Corporation) were used as the thermoplastic resin, and the molding temperature and the mold temperature shown in Table 6 were adopted as molding conditions, and the observation of the recesses in the surface of the above-mentioned aluminum test piece A, the gloss measurement thereof, and the measurement of the surface area increase ratio thereof were performed. In addition, the shear fracture load measurement test of the above-mentioned aluminum/resin test piece was conducted, and the evaluation was made.
The results thereof are shown in Table 6 together with the results in Example 1.

### [Example 11]

The aluminum test pieces A and B (aluminum shape) were prepared in the same manner as in Example 1 described above except that an etching liquid (chlorine ion concentration: 54 g/L) prepared by adding 50 g/L sodium chloride (NaCl) to a 2.5 wt% hydrochloric acid aqueous solution was used as the etching liquid, the aluminum/resin test pieces (integrally injection-molded aluminum/resin article) for the shear fracture load measurement test and the air tightness evaluation test were then prepared using the resin A, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
The results thereof are shown in Table 6 together with the results in Example 1.

### [Example 12]

The aluminum test pieces A and B (aluminum shape) were prepared in the same manner as in Example 1 described above except that an etching treatment in which a 2.5 wt% hydrochloric acid aqueous solution (chlorine ion concentration: 24 g/L) was used as the etching liquid and the aluminum pieces A and B were rinsed after being immersed for 10 minutes at 76°C was performed, the aluminum/resin test pieces (integrally injection-molded aluminum/resin article) for the shear fracture load measurement test and the air tightness evaluation test were then prepared using the resin A, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
The results thereof are shown in Table 6 together with the results in Example 1.

### [Example 13]

The aluminum test piece C (aluminum shape) was prepared in the same manner as in Example 1 described above except that the aluminum piece C having dimensions of 50 mm×25 mm was cut out from the aluminum alloy (JISA 1050-H24) plate having a thickness of 2 mm, and an etching treatment was performed using the aluminum piece C in which the aluminum piece C was rinsed after being immersed for 10 minutes at 30°C using an etching liquid (chlorine ion concentration: 173 g/L) prepared by adding 268 g/L aluminum chloride hexahydrate (AlCl₃·6H₂O) to a 6 wt% hydrochloric acid solution, the aluminum/resin test piece (integrally injection-molded aluminum/resin article) for the shear fracture load measurement test was then prepared using the resin A under the same molding conditions as those in Example 1, and the observation of the recesses in the surface of the above-mentioned aluminum test piece C, the gloss measurement thereof, and the measurement of the surface area increase ratio thereof were performed, and the evaluation was made.
The results thereof are shown in Table 6 together with the results in Example 1.

### [Shear fracture load measurement test]

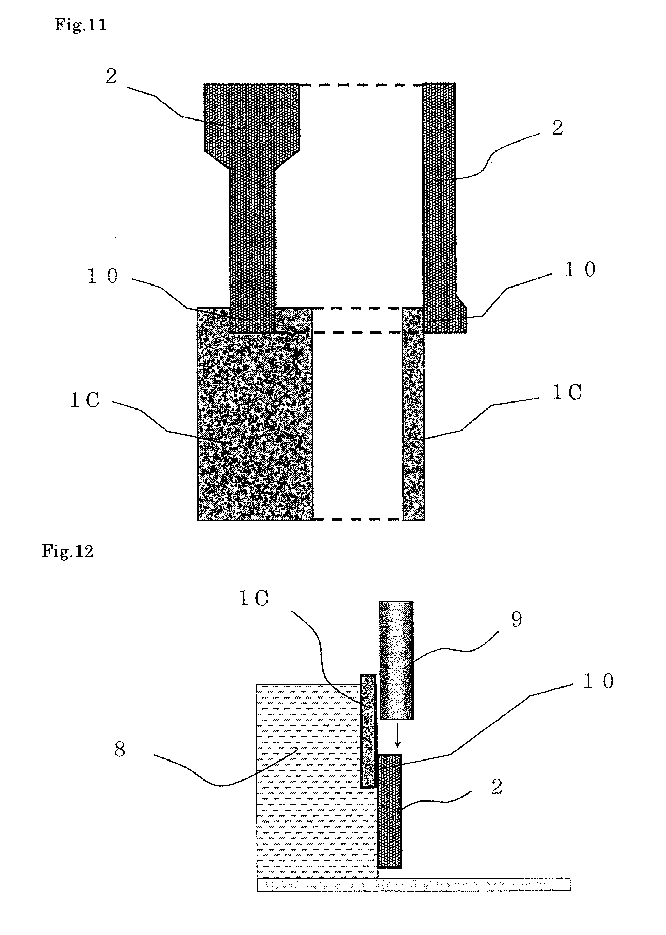

The obtained aluminum test piece C (aluminum shape) was set in the mold of the injection molder (TR40VR manufactured by Sodick Plustech Co. , Ltd.), by using the polyphenylene sulfide resin (resin A) containing the inorganic filler and the elastomer component as the thermoplastic resin similarly to Example 1, the injection molding was performed under conditions of injection time (including dwell time) of 7 seconds, an injection speed of 80 mm/second, a dwell pressure of 100 MPa, a molding temperature of 320°C, and a mold temperature of 159°C, and there was prepared an aluminum/resin test piece (integrally injection-molded aluminum/resin article) for the shear fracture load measurement test in which an aluminum test piece C (1C) having dimensions of 50 mm×25 mm×2 mm and the molded resin (2) having dimensions of 5 mm×10 mm and adhered to the surface of the above-mentioned aluminum test piece C (1C) were integrated together, as illustrated in FIG. 11.

With the use of the shear fracture load measurement test apparatus (Tensilon UTA-50KN-RTC manufactured by ORIENTEC Co., Ltd.), as illustrated in FIG. 12, the above-mentioned aluminum/resin test piece for the shear fracture load measurement test was fixed on a test piece fixing jig (8), and a bonding portion (10) was pressed by a pressing jig (9), whereby a peel state of the bonding portion between the aluminum test piece C (C1) and the molded resin (2) was examined. On the basis on a criterion that a case where the peel was the cohesion failure in which the resin was left on the side of the aluminum test piece was evaluated as excellent (o), while a case where the peel occurred at the bonding interface without the resin left on the side of the aluminum test piece was evaluated as poor (×), the evaluation was made on the observed peel states, and the result of the evaluation was excellent (o) in all cases.
The results thereof are shown in Table 6 together with the results in [Example 1.

### [Example 14]

The aluminum test piece C (aluminum shape) was prepared in the same manner as in Example 1 described above except that the aluminum piece C having dimensions of 50 mm×25 mm was cut out from the aluminum alloy (JISA 1050-H24) plate having a thickness of 2 mm, and an etching treatment was performed using the aluminum piece C in which the aluminum piece C was rinsed after being immersed for 20 minutes at 30°C using an etching liquid (chlorine ion concentration: 173 g/L) prepared by adding 268 g/L aluminum chloride hexahydrate (AlCl₃ · 6H₂O) to a 6 wt% hydrochloric acid solution, the aluminum/resin test piece (integrally injection-molded aluminum/resin article) for the shear fracture load measurement test was then prepared using the resin A under the same molding conditions as those in Example 1, and the observation of the recesses in the surface of the above-mentioned aluminum test piece C, the gloss measurement thereof, and the measurement of the surface area increase ratio thereof were performed. In addition, similarly to Example 13, the shear fracture loadmeasurement test of the aluminum/resin test piece was conducted, and the evaluation was made.
The results thereof are shown in Table 6 together with the results in Example 1.

### [Example 15]

The aluminum test piece C (aluminum shape) was prepared in the same manner as in Example 1 described above except that the aluminum piece C having dimensions of 50 mm×25 mm was cut out from the aluminum alloy (JISA 052-H34) plate having a thickness of 2 mm, and an etching treatment was performed using the aluminum piece C in which the aluminum piece C was rinsed after being immersed for 20 minutes at 30°C using an etching liquid (chlorine ion concentration: 173 g/L) prepared by adding 268 g/L aluminum chloride hexahydrate (AlCl₃·6H₂O) to a 6 wt% hydrochloric acid solution, the aluminum/ resin test piece (integrally injection-molded aluminum/resin article) for the shear fracture load measurement test was then prepared using the resin A under the same molding conditions as those in Example 1, and the observation of the recesses in the surface of the above-mentioned aluminum test piece C, the gloss measurement thereof, and the measurement of the surface area increase ratio thereof were performed. In addition, similarly to Example 13, the shear fracture load measurement test of the aluminum/resin test piece was conducted, and the evaluation was made.
The results thereof are shown in Table 6 together with the results in Example 1.

### [Example 16]

The aluminum test piece C (aluminum shape) was prepared in the same manner as in Example 1 described above except that the aluminum piece C having dimensions of 50 mmx25 mm was cut out from the aluminum alloy (JISA 3003-H24) plate having a thickness of 2 mm, and an etching treatment was performed using the aluminum piece C in which the aluminum piece C was rinsed after being immersed for 18 minutes at 30°C using an etching liquid (chlorine ion concentration: 173 g/L) prepared by adding 268 g/L aluminum chloride hexahydrate (AlCl₃ · 6H₂O) to a 6 wt% hydrochloric acid solution, the aluminum/resin test piece (integrally injection-molded aluminum/resin article) for the shear fracture load measurement test was then prepared using the resin A under the same molding conditions as those in Example 1, and the observation of the recesses in the surface of the above-mentioned aluminum test piece C, the gloss measurement thereof, and the measurement of the surface area increase ratio thereof were performed. In addition, similarly to Example 13, the shear fracture loadmeasurement test of the aluminum/resin test piece was conducted, and the evaluation was made.
The results thereof are shown in Table 6 together with the results in Example 1.

### [Example 17]

The aluminum test piece C (aluminum shape) was prepared in the same manner as in Example 1 described above except that the aluminum piece C having dimensions of 50 mm×25 mm was cut out from the aluminum alloy (JISA 1050-H24) plate having a thickness of 2 mm, and was used, the aluminum/resin test piece (integrally injection-molded aluminum/resin article) for the shear fracture load measurement test was then prepared using the resin A under the same molding conditions as those in Example 1, and the observation of the recesses in the surface of the above-mentioned aluminum test piece C, the gloss measurement thereof, and the measurement of the surface area increase ratio thereof were performed. In addition, similarly to Example 13, the shear fracture load measurement test of the aluminum/resin test piece was conducted, and the evaluation was made.
The results thereof are shown in Table 6 together with the results in Example 1.

**[Table 5]**

| Ex. No. | Aluminum shape | | | | | | | | Molded resin | | | Integrally injection-molded aluminum/resin article | | | |
|---|---|---|---|---|---|---|---|---|---|---|---|---|---|---|---|
| | Etching liquid | | | Recess | | 60° gloss | Laminated portion | Surface area increase ratio | Resin | Molding temperature (°C) | Mold temperature (°C) | Shear fracture load measurement test | | Air tightness evaluation test | |
| | Acid aqueous solution | Water-soluble inorganic halogen compound | | Shape | Size | | | | | | | | | | |
| | | Compound | Cl⁻ concentration (g/L) | | | | | | | | | Measured value (N) | Evaluation | Measured value (MPa) | Evaluation |
| 1 | 2.5 wt% hydrochloric acid | AlCl₃·6H₂O | 48 | ○ | ○ | 47 | ○ | 3.35 | A | 320 | 159 | 750 | ○ | >0.6 | ○ |
| | | | | | | | ○ | 3.40 | B | 320 | 159 | 785 | ○ | >0.6 | ○ |
| | | | | | | | ○ | 3.60 | C | 320 | 159 | 703 | ○ | >0.6 | ○ |
| 2 | 2.5 wt% hydrochloric acid | AlCl₃·6H₂O | 48 | ○ | ○ | 48 | ○ | 3.20 | A | 320 | 159 | 740 | ○ | >0.6 | ○ |
| 3 | 2.5 wt% hydrochloric acid | AlCl₃·6H₂O | 48 | ○ | ○ | 45 | ○ | 3.90 | A | 320 | 159 | 656 | ○ | >0.6 | ○ |
| 4 | 50 wt% phosphoric acid | NaCl | 30 | ○ | ○ | 51 | ○ | 2. 90 | A | 320 | 159 | 804 | ○ | >0.6 | ○ |
| 5 | 10 wt% sulfuric acid | NaCl | 30 | ○ | ○ | 52 | ○ | 2.80 | A | 320 | 159 | 790 | ○ | >0.6 | ○ |
| 6 | 30 wt% oxalic acid | NaCl | 30 | ○ | ○ | 49 | ○ | 3.50 | A | 320 | 159 | 780 | ○ | >0.6 | ○ |
| 7 | 2.5 wt% hydrochloric acid | AlCl₃·6H₂O | 48 | ○ | ○ | 45 | ○ | 3.55 | D | 260 | 138 | 410 | ○ | - | - |
| | | | | ○ | ○ | 48 | ○ | 3.20 | E | 260 | 120 | 430 | ○ | - | - |
| | | | | ○ | ○ | 49 | ○ | 3.80 | E | 260 | 138 | 820 | ○ | - | - |
| | | | | ○ | ○ | 46 | ○ | 3.90 | F | 260 | 90 | 400 | ○ | - | - |
| 8 | 2.5 wt% hydrochloric acid | AlCl₃·6H₂O | 48 | ○ | ○ | 45 | ○ | 3.35 | G | 200 | 138 | 730 | ○ | - | - |
| | | | | ○ | ○ | 43 | ○ | 3.45 | H | 200 | 138 | 706 | ○ | - | - |

**[Table 6]**

| Ex. No. | Aluminum shape | | | | | | | | Molded resin | | | Integrally injection-molded aluminum/resin article | | | |
|---|---|---|---|---|---|---|---|---|---|---|---|---|---|---|---|
| | Etching liquid | | | Recess | | 60° gloss | Laminated portion | Surface area increase ratio | Resin | Molding temperaTure (°C) | Mold temperaTure (°C) | Shear fracture load measurement test | | Air tightness evaluation test | |
| | Acid aqueous solution | Waster-soluble inorganic halogen compound | | Shape | Size | | | | | | | | | | |
| | | Compound | Cl⁻ concertration (g/L) | | | | | | | | | Measured value (N) | Evaluation | Measured value (MPa) | Evaluation |
| 9 | 2.5 wt% hydrochloric acid | AlCl₃·6H₂O | 48 | ○ | ○ | 42 | ○ | 3.55 | I | 340 | 190 | 360 | ○ | - | - |
| | | | | ○ | ○ | 49 | ○ | 3.60 | J | 340 | 185 | 490 | ○ | - | - |
| | | | | ○ | ○ | 42 | ○ | 4.10 | K | 290 | 159 | 580 | ○ | - | - |
| | | | | ○ | ○ | 47 | ○ | 3.60 | K | 290 | 185 | 706 | ○ | - | - |
| 10 | 2.5 wt% hydrochloric acid | AlCl₃·6H₂O | 48 | ○ | ○ | 44 | ○ | 3.80 | L | 290 | 138 | 360 | ○ | - | - |
| | | | | ○ | ○ | 45 | ○ | 3.75 | M | 260 | 165 | 1410 | ○ | - | - |
| 11 | 2.5 wt% hydrochloric acid | NaCl | 54 | ○ | ○ | 41 | ○ | 3.65 | A | 320 | 159 | 761 | ○ | >0.6 | ○ |
| 12 | 2.5 wt% hydrochloric acid | - | 24 | ○ | ○ | 58 | ○ | 2.85 | A | 320 | 159 | 728 | ○ | >0.6 | ○ |
| 13 | 6 wt% hydrochloric acid | AlCl₃·6H₂O | 173 | ○ | ○ | 50 | ○ | 3.60 | A | 320 | 159 | 1550 | ○ | - | - |
| 14 | 6 wt% hydrochloric acid | AlCl₃·6H₂O | 173 | ○ | ○ | 7 | ○ | 5.50 | A | 320 | 159 | 1670 | ○ | - | - |
| 15 | 6 wt% hydrochloric acid | AlCl₃·6H₂O | 173 | ○ | ○ | 30 | ○ | 1.55 | A | 320 | 159 | 1084 | ○ | - | - |
| 16 | 6 wt% hydrochloric acid | AlCl₃·6H₂O | 173 | ○ | ○ | 28 | ○ | 2.10 | A | 320 | 159 | 1231 | ○ | - | - |
| 17 | 2.5 wt% hydrochloric acid | AlCl₃·6H₂O | 48 | ○ | ○ | 41 | ○ | 4.30 | A | 320 | 159 | 1712 | ○ | - | - |

### [Comparative Example 1]

Aluminum test pieces A and B (aluminum shape of Comparative Example) were prepared only by the pretreatment of Example 1 without performing the etching treatment, aluminum/resin test pieces (integrally injection-molded aluminum/resin article) for the shear fracture load measurement test and the air tightness evaluation test were prepared using the resin A in the same manner as in Example 1, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
With regard to the shapes of the recesses, the shapes a to d seen in Example 1 were not observed and, with regard to sizes of the recesses, the opening width of each recess was 0.001 µm or more and less than 0.1 µm.
FIG. 7 illustrates a cross-sectional schematic view of a certain region of the observed aluminum test pieces A and B, and the evaluation results are shown in Table 7.

### [Comparative Example 2]

After being subj ected to the pretreatment in Example 1, aluminum pieces A and B were rinsed after being immersed in a 2.5 wt% hydrochloric acid aqueous solution for 4 minutes at 66°C, further rinsed after being immersed in a 5 wt% sodium hydroxide solution for 5 minutes at 50°C, further rinsed after being immersed in 30 wt% nitric acid for 3 minutes at room temperature and, thereafter, dried for 5 minutes using hot air of 120°C, whereby aluminum test pieces A and B (aluminum shape of Comparative Example) were prepared. Thereafter, in the same manner as in Example 1, aluminum/resin test pieces (integrally injection-molded aluminum/resin article) for the shear fracture load measurement test and the air tightness evaluation test were prepared using the resin A, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
The recesses having the shapes a to d observed in Example 1 were not seen and, with regard to sizes of the recesses, a large number of the recesses each having the opening width of more than 30 µm were observed.
FIG. 8 illustrates a cross-sectional schematic view of a certain region of the observed aluminum test pieces A and B, and the evaluation results are shown in Table 7.

### [Comparative Example 3]

After being subj ected to the pretreatment in Example 1, aluminum pieces A and B were rinsed after being immersed in a 50 wt% phosphoric acid aqueous solution for 4 minutes at 66°C and, thereafter, dried for 5 minutes using hot air of 120°C, whereby aluminum test pieces A and B (aluminum shape of Comparative Example) were prepared. Thereafter, in the same manner as in Example 1, aluminum/resin test pieces (integrally injection-molded aluminum/resin article) for the shear fracture load measurement test and the air tightness evaluation test were prepared using the resin A, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
The recesses having the shapes a to d observed in Example 1 were not seen and, with regard to sizes of the recesses, the opening width of each recess was more than 10 µm.
FIG. 9 illustrates a cross-sectional schematic view of a certain region of the observed aluminum test pieces A and B, and the evaluation results are shown in Table 7.

### [Comparative Example 4]

After being subjected to the pretreatment in Example 1, aluminum pieces A and B were rinsed after being immersed in a 10 wt% sulfuric acid aqueous solution for 4 minutes at 66°C and, thereafter, dried for 5 minutes using hot air of 120°C, whereby aluminum test pieces A and B (aluminum shape of Comparative Example) were prepared. Thereafter, in the same manner as in Example 1, aluminum/resin test pieces (integrally injection-molded aluminum/resin article) for the shear fracture load measurement test and the air tightness evaluation test were prepared using the resin A, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
The recesses having the shapes a to d observed in Example 1 were not seen and, with regard to sizes of the recesses, the opening width of each recess was 0.001 µm or more and less than 0.1 µm.
FIG. 7 illustrates a cross-sectional schematic view of a certain region of the observed aluminum test pieces A and B, and the evaluation results are shown in Table 7.

### [Comparative Example 5]

After being subjected to the pretreatment in Example 1, aluminum pieces A and B were rinsed after being immersed in a 30 wt% oxalic acid aqueous solution for 4 minutes at 66°C and, thereafter, dried for 5 minutes using hot air of 120°C, whereby aluminum test pieces A and B (aluminum shape of Comparative Example) were prepared. Thereafter, in the same manner as in Example 1, aluminum/resin test pieces (integrally injection-molded aluminum/resin article) for the shear fracture load measurement test and the air tightness evaluation test were prepared using the resin A, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
The recesses having the shapes a to d observed in Example 1 were not seen and, with regard to sizes of the recesses, the opening width of each recess was 0.001 µm or more and less than 0.1 µm.
FIG. 7 illustrates a cross-sectional schematic view of a certain region of the observed aluminum test pieces A and B, and the evaluation results are shown in Table 7.

### [Comparative Example 6]

The same aluminum pieces A and B as those in Example 1 were firstly immersed in an etching liquid (aqueous solution) containing 26 g/L hydrogen peroxide and 90 g/L sulfuric acid for 1 minute at 20°C to remove natural oxide films, then immersed in an etching liquid (aqueous solution, chlorine ion concentration: 0.1 g/L) containing 80 g/L hydrogen peroxide, 90 g/L sulfuric acid, 5 g/L benzotriazole, and 0.2 g/L sodium chloride for 5 minutes at 25°C and rinsed using ion-exchanged water, and, thereafter, dried for 5 minutes using hot air of 120°C, whereby an aluminum test piece A (aluminum shape of Comparative Example) was prepared. Thereafter, in the same manner as in Example 1, an aluminum/resin test piece (integrally injection-molded aluminum/resin article) for the shear fracture load measurement test and the air tightness evaluation test was prepared using the resin A, and the observation of the recess in the surface of the above-mentioned aluminum test piece A, the gloss measurement thereof, and the measurement of the surface area increase ratio thereof were performed. In addition, the shear fracture load measurement test of the above-mentioned aluminum/res in test piece was conducted, and the evaluation was made.
The recesses having the shapes a to d observed in Example 1 were not seen and, with regard to sizes of the recesses, the opening width of each recess was in the range of 0.001 tumor more and less than 0.1 µm.
The evaluation results are shown in Table 7.

### [Comparative Example 7]

After being subj ected to the pretreatment in Example 1, aluminum pieces A and B were rinsed after being immersed in an etching liquid formed of a 30 wt% nitric acid aqueous solution for 4 minutes at 66°C and, thereafter, dried for 5 minutes using hot air of 120°C, whereby aluminum test pieces A and B (aluminum shape of Comparative Example) were prepared. Thereafter, in the same manner as in Example 1, aluminum/resin test pieces (integrally injection-molded aluminum/resin article) for the shear fracture load measurement test and the air tightness evaluation test were prepared using the resin A, and the observation of the recesses in the surfaces of the above-mentioned aluminum test pieces A and B, the gloss measurement thereof, and the measurement of the surface area increase ratios thereof were performed. In addition, the shear fracture load measurement test and the air tightness evaluation test of the above-mentioned aluminum/resin test pieces were conducted, and the evaluation was made.
The recesses having the shapes a to d observed in Example 1 were not seen and, with regard to sizes of the recesses, the opening width of each recess was 0.001 µm or more and less than 0.1 µm.
Further, the evaluation results described above are shown in Table 7 together with the results of Example 1.

**[Table 7]**

| Co.- ex. No. | Aluminum shape | | | | | | | | Molded resin | | | Integrally injection-molded aluminum/resin article | | | |
|---|---|---|---|---|---|---|---|---|---|---|---|---|---|---|---|
| | Etching liquid | | | Recess | | 60° gloss | Laminated portion | Surface area increase ratio | Resin | Molding temperature (°C) | Mold temperaTure (°C) | Shear fracture Load Measurement test | | Air tightness Evaluation test | |
| | Acid aqueous solution | Water-soluble inorganic halogen compound | | Shape | Size | | | | | | | | | | |
| | | Compound | Cl⁻ concentration (g/L) | | | | | | | | | Measured Value (N) | Evaluation | Measured Value (MPa) | Evaluation |
| 1 | Pretreatment only | - | 0 | × | × (*3) | 194 | × | 1.01 | A | 320 | 159 | (*5) | × | 0 | × |
| 2 | (*1) | - | 24 | × | × (*4) | 24 | × | 1.15 | A | 320 | 159 | (*5) | × | 0.1 | × |
| 3 | 50 wt% phosphoric acid | - | 0 | × | ○ | 45 | × | 1.12 | A | 320 | 159 | (*5) | × | 0 | × |
| 4 | 10 wt% sulfuric acid | - | 0 | × | × (*3) | 43 | × | 1.03 | A | 320 | 159 | (*5) | × | 0.1 | × |
| 5 | 30 wt% oxalic acid | - | 0 | × | × (*3) | 48 | × | 1.02 | A | 320 | 159 | (*5) | × | 0 | × |
| 6 | (*2) | NaCl | 0.1 | × | × (*3) | 190 | × | 1.01 | A | 320 | 159 | (*5) | × | - | - |
| 7 | 30 wt% nitric acid | - | 0 | × | × (*3) | 201 | × | 1.03 | A | 320 | 159 | (*5) | × | 0 | × |

| | | | | | | | | | | | | | | | |
|---|---|---|---|---|---|---|---|---|---|---|---|---|---|---|---|
| *1: 2.5 wt%-HCl→5 wt%-NaOH *2: 80 g/L-H₂O₂+90 g/L-H₂SO₄+5 g/L benzotriazole+0.2 g/L-NaCl (Cl⁻ concentration: 0.1 g/L) *3: 0.001 µm or more and less than 0.1 µm *4: more than 30 µm *5: when the molded article is released from the mold, the aluminum shape was peeled from the molded resin. | | | | | | | | | | | | | | | |

## Claims

1. An integrally injection-molded aluminum/resin article, comprising:
an aluminum shape which is made of an aluminum alloy and has irregularities in a part of or a whole of a surface; and
a molded resin which is bonded to one surface of the aluminum shape in a butting manner by injection molding of a thermoplastic resin, wherein:
the surface of the aluminum shape has a plurality of recesses derived from the irregularities;
the molded resin has fitting portions formed in the recesses by entering of the thermoplastic resin followed by solidification during the injection molding of the thermoplastic resin; and
the aluminum shape and the molded resin are locked with each other through the recesses and the fitting portion.

2. An integrally injection-molded aluminum/resin article, comprising:
an aluminum shape which is made of an aluminum alloy and has irregularities in a part or a whole of a surface; and
a molded resin which is integrally formed on the surface of the aluminum shape by injection molding of a thermoplastic resin, wherein:
the surface of the aluminum shape has a plurality of recesses each being formed owing to the irregularities and having an opening width of 0.1 µm or more and 30 µm or less and a depth of 0.1 µm or more and 30 µm or less, which are measured by observation using a scanning electron microscope, on a half line orthogonal to a thickness direction in a cross section of the aluminum shape in the thickness direction and positioned between a top line passing a highest portion of the irregularities and a bottom line passing a deepest portion of the irregularities;
the molded resin has fitting portions formed in the recesses by entering of the thermoplastic resin followed by solidification during the injection molding of the thermoplastic resin; and
the aluminum shape and the molded resin are fixed to each other through the recesses and the fitting portions.

3. An integrally injection-molded aluminum/resin article according to claim 1 or 2, wherein:
the aluminum shape has a protrusion portion protruding in an overhang-like shape from a part or a whole of an opening edge portion of each of the recesses toward a center in an opening width direction, the protrusion portion being formed in a part or all of the plurality of recesses of the aluminum shape; and
the protrusion portion forms a locking structure in which each of the recesses of the aluminum shape and each of the fitting portions of the molded resin are not detachable from each other.

4. An integrally injection-molded aluminum/resin article according to claim 3, wherein, when a large number of observation lines extending from a side of the molded resin toward a side of the aluminum shape in a thickness direction are drawn at intervals of 0.1 µm in a cross section of the integrally injection-molded aluminum/resin article in the thickness direction, the overhang-like protrusion portion forms at least one laminated portion formed of resin-aluminum-resin layers on one observation line, a thickness of an aluminum shape portion of the laminated portion is in a range of 0.1 µm or more and 30 µm or less, and at least one overhang-like protrusion portion is present in a range of 1000 observation lines.

5. An integrally injection-molded aluminum/resin article according to any one of claims 1 to 4, wherein the plurality of recesses of the aluminum shape has a double recess structure in which at least one internal recess is formed in an internal wall surface in a part or all of the plurality of recesses.

6. An integrally injection-molded aluminum/resin article according to any one of claims 1 to 4, wherein the plurality of recesses of the aluminum shape has an internal irregular structure in which at least one internal protrusion is formed in an internal wall surface in a part or all of the plurality of recesses.

7. An integrally injection-molded aluminum/resin article according to any one of claims 1 to 6, wherein a 60° specular gloss of the aluminum shape is 60 or less.

8. An integrally injection-molded aluminum/resin article according to any one of claims 1 to 7, wherein a surface area of the aluminum shape is 1.2 times or more and 10 times or less as large as that of an aluminum alloy material before the irregularities are formed.

9. A process for producing an integrally injection-molded aluminum/resin article including an aluminum shape constituted of an aluminum alloy and a molded resin formed on a surface of the aluminum shape by injection molding of a thermoplastic resin, comprising:
performing an etching treatment on an aluminum alloy material to form an aluminum shape having a plurality of recesses derived from irregularities in a part or a whole of a surface;
molding fitting portions of the molded resin by entering of the thermoplastic resin into each of the plurality of recesses of the aluminum shape followed by solidification during the injection molding of the thermoplastic resin; and
producing an integrally injection-molded aluminum/resin article in which the recesses of the aluminum shape and the fitting portions of the molded resin are locked with each other to integrally bond the aluminum shape and the molded resin to each other.

10. A process for producing an integrally injection-molded aluminum/resin article according to claim 9, wherein the etching treatment of the aluminum alloy material is performed by using, as an etching liquid, an acid aqueous solution having an acid concentration of 0.1 wt% or more and 80 wt% or less containing a halogen ion at a concentration in a range of 0.5 g/L or more and 300 g/L or less.

11. A process for producing an integrally injection-molded aluminum/resin article according to claim 10, wherein the etching liquid is prepared by adding a water-soluble inorganic halogen compound to the acid aqueous solution.

12. A process for producing an integrally injection-molded aluminum/resin article according to any one of claims 9 to 11, wherein:
the aluminum shape has a protrusion portion protruding in an overhang-like shape from a part or a whole of an opening edge portion of each of the recesses toward a center in an opening width direction, the protrusion portion being formed in a part or all of the plurality of recesses of the aluminum shape; and
the protrusion portion forms a locking structure in which each of the recesses of the aluminum shape and each of the fitting portions of the molded resin are not detachable from each other.

13. An integrally injection-molded aluminum/resin article according to claim 12, wherein, when a large number of observation lines extending from a side of the molded resin toward a side of the aluminum shape in a thickness direction are drawn at intervals of 0.1 µm in a cross section of the integrally injection-molded aluminum/resin article in the thickness direction, the overhang-like protrusion portion forms at least one laminated portion formed of resin-aluminum-resin layers on one observation line, a thickness of an aluminum shape portion of the laminated portion is in a range of 0.1 µm or more and 30 µm or less, and at least one overhang-like protrusion portion is present in a range of 1000 observation lines.

14. A process for producing an integrally injection-molded aluminum/resin article according to any one of claims 9 to 13, wherein each of the plurality of recesses formed owing the irregularities in the surface of the aluminum shape has an opening width of 0.1 µm or more and 30 µm or less and a depth of 0.1 µm or more and 30 µm or less, which are measured by observation using a scanning electron microscope, on a half line orthogonal to a thickness direction in a cross section of the aluminum shape in the thickness direction and positioned between a top line passing a highest portion of the irregularities and a bottom line passing a deepest portion of the irregularities.

15. A process for producing an integrally injection-molded aluminum/resin article according to any one of claims 9 to 14, wherein a 60° specular gloss of the aluminum shape is 60 or less.

16. A process for producing an integrally injection-molded aluminum/resin article according to any one of claims 9 to 15, wherein a surface area of the aluminum shape is 1.2 times or more and 10 times or less as large as that of an aluminum alloy material before the irregularities are formed.
